# NEUE EUROPÄISCHE PATENTSCHRIFT

(11) **EP 1 382 410 B2**
(45) Veröffentlichungstag und Bekanntmachung des Hinweises auf die Entscheidung über den Einspruch: **25.12.2019**
(45) Hinweis auf die Patenterteilung: 26.04.2006
(21) Anmeldenummer: 03001477.3
(22) Anmeldetag: 23.01.2003
(51) Int. Cl.: B23B 51/02

(54) **Bohrwerkzeug**
Drilling tool
Foret

(30) Priorität: 18.07.2002 DE 20210909 U
(43) Veröffentlichungstag der Anmeldung: 21.01.2004
(73) Patentinhaber: HAKOS Präzisionswerkzeuge Hakenjos GmbH, 78054 Villingen-Schwenningen (DE)
(72) Erfinder: Hakenjos, Werner, 78056 Villingen-Schwenningen (DE)
(74) Vertreter: Augspurger, Stefanie

(56) Entgegenhaltungen:
- DE-A- 3 628 262
- DE-U- 20 104 257
- FR-A- 2 779 366

## Beschreibung

Die Erfindung betrifft ein Bohrwerkzeug gemäß dem Oberbegriff von Anspruch 1, wie es aus der DE 20104257 bekannt ist insbesondere ein Bohrwerkzeug mit zumindest drei Schneiden. Die Erfindung betrifft auch die Verwendung eines Bohrwerkzeugs (siehe Anspruch 13).

Je nach ihrem Verwendungszweck sind Bohrwerkzeuge als zweischneidige Spiralbohrer oder auch als Kronenfräser ausgebildet. Mit den aus dem Stand der Technik bekannten Werkzeugen ist die saubere Bearbeitung von Blechen, insbesondere von Karosserieblechen an Fahrzeugen schwierig, wenn man zweischneidige Werkzeuge einsetzt. Diese neigen zu starkem Verkanten im Werkstück, was zu Beschädigungen und Ausbruch führen kann. Die Werkzeuge werden auch relativ schnell stumpf und müssen ersetzt oder nachgeschliffen werden. Die hohe Belastung der Schneiden führt auch zu starker Erwärmung der Schneidkanten. Entsprechend verkürzt sich die Standzeit des Werkzeugs.

Das Verkanten des Bohrwerkzeugs kann hier schnell durch die mechanische Belastung zu einer Verformung der Bleche führen, die sich nur schwer oder gar nicht korrigieren läßt.

Die FR 2779366 zeigt einen dreischneidigen Steinbohrer mit einer Zentrierspitze.

Die DE 20104257 zeigt einen zweischneidigen Schweißpunkt-Bohrer mit einem Bohrkopf an beiden Endes des Schaftes.

Der Erfindung liegt die Aufgabe zugrunde, ein Bohrwerkzeug bereitzustellen, das sich für die Bearbeitung von Blechen eignet.

Diese Aufgabe wird bereits in höchst überraschend einfacher Weise durch ein Bohrwerkzeug gemäß Anspruch 1 gelöst. Vorteilhafte Weiterbildungen sind Gegenstand der Unteransprüche. Dementsprechend umfaßt ein erfindungsgemäßes Bohrwerkzeug einen Schaft mit einem ersten Ende und einem zweiten Ende, wobei zumindest eines der Enden einen Bohrkopf mit Spannuten aufweist , wobei der Bohrkopf zumindest drei Schneiden und einen Zentrierkegel aufweist und wobei die Hauptschneidkanten der zumindest drei Schneiden des Bohrkopfes zumindest abschnittsweise hinterschnitten sind. Der Zentrierkegel ragt dabei aus einer Fläche, die durch Rotation des Bohrwerkzeugs um seine Schaftachse von den Schneidkanten beschrieben wird, hervor.

Das erfindungsgemäße Bohrwerkzeug zeichnet sich unter anderem dadurch aus, daß drei oder mehr Schneiden deutlich weniger zum Verkanten neigen, als zweischneidige Werkzeuge. Daraus ergibt sich ein deutlich ruhigeres Bohrverhalten.

Ebenso wird die mechanische Belastung der einzelnen Schneide bei drei oder mehr Schneiden gegenüber einem zweischneidigen Werkzeug abgesenkt. Damit kann der Verschleiß verringert und die Standzeit erhöht werden. Das Werkzeug muß demgemäß auch nicht so häufig gewechselt werden. Die geringere Neigung zum seitlichen Verkanten verringert nicht allein den Verschleiß, sondern erniedrigt auch die Bruchwahrscheinlichkeit des Werkzeugs. Dadurch, daß sich die Zerspanung auf zumindest drei Schneiden verteilt, ergibt sich außerdem eine Spanquerschnittverringerung. Dies führt auch allgemein zu vergleichsweise glatteren Bohrungen.

Der aus der von den stirnseitigen Schneidkanten hervorragende Zentrierkegel verhindert ein Abweichen aus der Senkrechten beim Bohren. Zudem ist ein Ankörnen vor dem Bohren nicht notwendig, um eine punktgenaue Bohrung herzustellen.

Der positive Hinterschliff der Hauptschneidkanten verringert die Reibung. Dies führt ebenfalls zu verringertem Verschleiß des Werkzeuges. Einhergehend mit der verringerten Reibung erniedrigt sich bei gleichbleibender Schneidleistung auch die Wärmeentwicklung an den Schneidkanten und somit deren thermisch Belastung. Auch das erforderliche Drehmoment zur Rotation des Bohrwerkzeugs wird reduziert, so daß eine geringere Antriebsleistung für das Bohren anfällt. Durch die geringere Reibung wird eine zusätzliches Kühlen mit umweltbelastenden Kühlflüssigkeiten nicht notwendig. Das Werkzeug ist damit für Trockenbearbeitung geeignet.

Insgesamt läßt sich so mit dem erfindungsgemäßen Werkzeug eine deutliche Produktionssteigerung erzielen.

Das Werkzeug eignet sich im besonderen Maße auch zum Lösen und Aufbohren geschweißter, gelöteter oder genieteter Verbindungselemente an Blechen, wie insbesondere an Karosserieblechen von Fahrzeugen.

Das Werkzeug kann zum Bohren und Lösen in verschiedensten Materialien, wie etwa Metallen, Kunststoffen oder Verbundmaterialien, wie beispielsweise glasfaserverstärkten Kunstoffen verwendet werden. Entsprechend ist das Werkzeug in allen Werkstätten und Produktionsbetrieben zweckmäßig einsetzbar.

Die Fläche die durch Rotation des Bohrwerkzeugs um seine Schaftachse von den Hauptschneidkanten beschrieben wird, umfaßt gemäß einer bevorzugten Ausführungsform eine im wesentlichen ebene Fläche. Damit weist auch die Stirnseite eines mit dem Bohrwerkzeug gebohrten Loches eine korrespondierende im wesentlichen ebene Fläche auf. Dies ist besonders günstig, um geschweißte, gelötete oder genietete Verbindungselemente aufzubohren und die verbundenen Teile so zu Lösen. Sind zwei Bleche auf diese Weise zusammengefügt, so kann auf diese Weise erreicht werden, daß die Verbindung aufgebohrt werden kann, ohne das in Vorschubrichtung rückseitige Blech zu durchbohren. Lediglich der hervorragende Zentrierkegel dringt dabei in das zweite Blech ein.

Der zum Bohren erforderliche Vorschubdruck kann besonders dadurch reduziert werden, indem der Zentrierkegel ebenfalls zumindest drei Schneidkanten aufweist. Insbesondere können dabei die Schneidkanten des Zentrierkegels schräg zur Vorschubrichtung verlaufen. Insbesondere können die Schneidkanten des Zentrierkegels einen kleineren Spitzenwinkel als die Hauptschneiden aufweisen. So können beispielsweise die Schneidkanten auf einer Kegelfläche um die Rotationsachse verlaufen. Ist der Winkel, unter dem die Schneidkanten zur Schaftachse, beziehungsweise der Rotationsachse verlaufen, größer als der Winkel, unter dem die Hauptschneidachsen zur Rotationsachse liegen, so ist beim Vorschub des Bohrers der Anpreßdruck der Schneidkanten des Zentrierkegels höher als der Anpreßdruck auf die Hauptschneidkanten. Auf diese Weise wird die schlechtere Schneidwirkung durch die geringe Umfangsgeschwindigkeit im achsennahen Bereich des Bohrers, in welchen die Schneidkanten des Zentrierkegels angeordnet sind, teilweise kompensiert.

Auch die Schneidkanten des Zentrierkegels können zumindest abschnittsweise positiv hinterschliffen sein, um die Reibung zu vermindern und die Schneidfähigkeit zu erhöhen.

Außerdem können mit Vorteil die Freiflächen der Nebenschneidkanten hinterschliffen sein, um die Reibung des Bohrswerkzeugs an der Bohungswandung zu verringern.

Gemäß einer Ausführungsform der Erfindung weist der Schaft zumindest eine Stufe entlang der Vorschubrichtung auf. Durch die Stufe werden Schaftabschnitte mit unterschiedlichen Durchmessern definiert, so daß der Schaftabschnitt mit dem größeren Durchmesser als Anschlag dienen kann, um definierte Bohrtiefen einzustellen.

Der Schaft kann zumindest eine Spannfläche aufweisen. Die Spannfläche kann dazu dienen, in einem geeigneten Futter die Verdrehung des Bohrers zu verhindern.

Das Bohrwerkzeug, insbesondere der Bohrkopf kann besonders vorteilhaft auch eine funktionelle Beschichtung aufweisen. Die Beschichtung kann beispielsweise ein reibungsminderndes Material, insbesondere einen festen Schmierstoff umfassen. Dies verringert die Reibung während des Bohrens und erleichtert die Spanabfuhr in den Spankanälen, welche sich so schlechter in den Wandungen der Spankanäle verkeilen können. Die Beschichtung kann auch ein korrosionsschützendes Material umfassen, welches die Korrosion des Werkzeugs insbesondere an den Schneidkanten unterdrückt und so zur Verlängerung der Standzeit beiträgt. Insbesondere günstig auf die Standzeit wirkt es sich aus, wenn die Beschichtung ein Hartstoff-Material, umfaßt, welches die Schneidkanten schützt. Diese ermöglicht außerdem verschleißarmes Bohren in harten Materialien.

Das Material des Werkzeugs umfaßt vorteilhaft ein möglichst hartes Material. Geeignet sind dazu unter anderem Hartmetall, Feinkorn-Vollhartmetall, HSS oder HSSE.

Die Freiflächen der Hauptschneiden können einen konvex geformten Bereich aufweisen oder insbesondere auch vollständig konvex geformt sein. Diese Form ermöglicht ein seitliches Kippen des Werkzeugs beim Bohren bis zu einem gewissen Winkel, welcher bei einer bevorzugten Ausführungsform etwa 10° zur Normalen der Oberfläche des Werkstücks beträgt, ohne daß der Bohrer verkantet. Durch die konvexe Form entsteht eine geringere Belastung der Außenschneidflächen beim Arbeiten mit dem Werkzeug. Dadurch ergibt sich ein deutlich geringerer Werkzeugverschleiß.

Weisen beide Enden des Schafts einen Bohrkopf auf, so muß das Werkzeug nicht sofort ausgetauscht werden, falls einer der Bohrköpfe verschlissen ist. Das Werkzeug kann dann umgedreht wieder eingespannt werden, so daß die Arbeit mit dem anderen Bohrkopf fortgesetzt werden kann. Die Bohrköpfe können auch unterschiedliche Durchmesser aufweisen. Auf diese Weise können mit einem Bohrwerkzeug unterschiedliche Lochdurchmesser gebohrt werden. Dies ist beispielsweise für das Aufbohren und Lösen verschiedenenartiger Verbindungselemente oder das Trennen von Blechen mit unterschiedlichen Dicken vorteilhaft, die mit Verbindungselementen verbunden sind.

Außerdem können die Bohrköpfe sich auch in anderen Abmessungen und charakteristischen Größen unterscheiden. So können die Bohrköpfe unterschiedliche Spanwinkel, Freiwinkel, Anspitzwinkel oder Zentrierkegel mit unterschiedlichen Abmessungen aufweisen. Die Bohrköpfe können so für das Bohren verschiedener Materialien, etwa von Blechen unterschiedlicher Härte optimiert sein.

Die Erfindung wird nachfolgend anhand bevorzugter Ausführungsformen und unter Bezugnahme auf die beigefügten Zeichungen näher erläutert. Dabei verweisen gleiche Bezugszeichen gleiche oder ähnliche Teile.

Es zeigen:
- Fig. 1: eine Seitenansicht auf eine Ausführungsform des erfindungsgemäßen Bohrwerkzeugs,
- Fig. 2A: eine Aufsicht auf den Bohrkopf,
- Fig. 2B: eine Aufsicht auf den Bohrkopf gemäß einer weiteren Ausführungsform,
- Fig. 3: eine Seitenansicht auf eine weitere Ausführungsform des erfindungsgemäßen Bohrwerkzeugs, und
- Fig. 4: eine Seitenansicht auf eine Ausführungsform des erfindungsgemäßen Bohrwerkzeugs mit zwei Bohrköpfen.

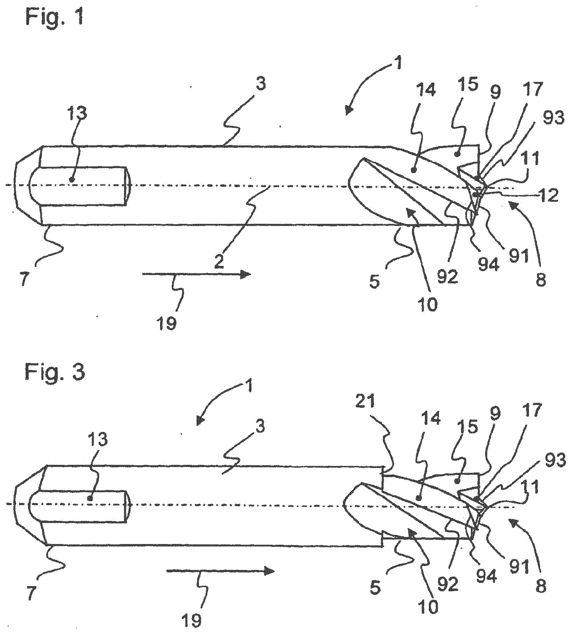

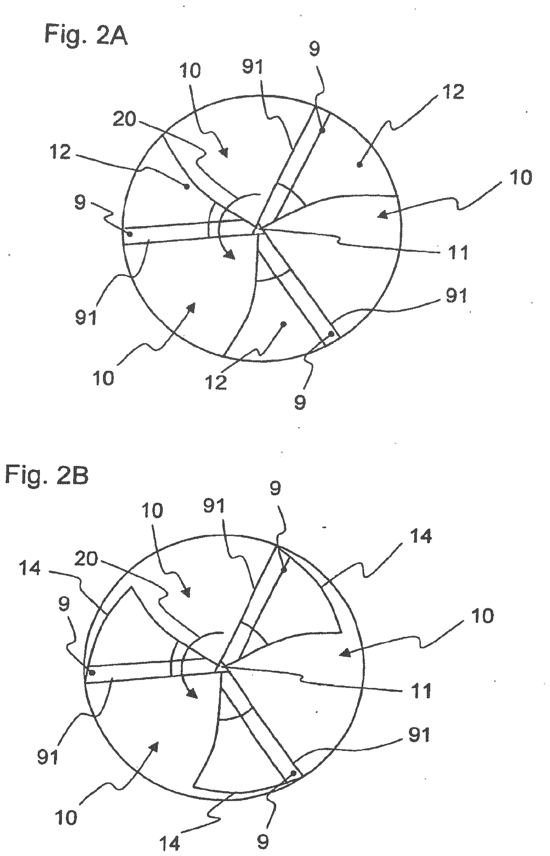

In Fig. 1 ist eine Seitenansicht einer Ausführungsform des als Ganzes mit 1 bezeichneten Bohrwerkzeugs dargestellt. Fig. 2A zeigt eine Aufsicht auf die Stirnseite des Bohrkopfes des Bohrwerkzeugs 1. Das Bohrwerkzeug 1 umfaßt einen Schaft 3 mit einem ersten Ende 5 und einem zweiten Ende 7. Das erste Ende 5 des Schafts 3 weist einen Bohrkopf 8 mit Spannuten 10 auf. Das zweite Ende 7 dient zur Aufnahme in ein geeignetes Bohrfutter. Der Bohrkopf 8 weist drei Schneiden 9 und einen Zentrierkegel 11 an der Stirnseite des Schaftes 3 auf. Die Spannuten 10 verlaufen nach Art eines Spiralbohrers.

Der Schaft 3 weist an seinem zweiten Ende 7 außerdem eine Spannfläche 13 auf, welche durch Formschluß mit einem geeigneten Bohrfutter die Verdrehung des Bohrwerkzeugs verhindert.

Die Hauptschneidkanten 91 der drei Schneiden 9 des Bohrkopfes 8 sind hinterschliffen. Dementsprechend weisen die Freiflächen 12 der Hauptschneidkanten 91 einen positiven Freiwinkel auf.

Der Zentrierkegel 11 ist so geformt, daß er aus einer Fläche, die durch Rotation des Bohrwerkzeugs 1 um seine Schaftachse, beziehungsweise Rotationsachse 2 von den Schneidkanten 91 beschrieben wird, hervorragt. Durch die hervorragende Anordnung des Zentrierkegels wird erreicht, daß beim Bohren auf diesen ein verglichen mit anderen Flächen der Stirnseite des Bohrkopfs 8 erhöhter Anpressdruck wirkt. Dies bewirkt eine Zentrierung des Bohrwerkzeuges um die durch den Zentrierkegel laufende Schaftachse 2 und verhindert so ein Verlaufen des Bohrwerkzeugs 1.

Die Fläche, die durch Rotation des Bohrwerkzeugs 1 um seine Schaftachse 2 von den Hauptschneidkanten 91 beschrieben wird, umfaßt bei der anhand von Fig. 1 beschriebenen Ausführungsform eine im wesentlichen ebene Fläche. Dementsprechend verlaufen die Hauptschneidkanten 91 des Werkzeugs 1 in radialer Richtung im wesentlichen senkrecht zur Schaft-, beziehungsweise Rotationsachse 2 und der Spitzenwinkel der Hauptschneidkanten 91 liegt bei 180°. Damit wird beim Bohren von den Hauptschneidkanten 91 eine im wesentlichen ebene Stirnfläche erzeugt. Dies ist insbesondere für sehr geringe Bohrtiefen vorteilhaft, etwa, wenn eine Verbindungsstelle zwischen zwei Blechen aufgebohrt werden soll und ein Durchbohren beider Bleche nicht erwünscht ist.

Der Zentrierkegel 11 weist ebenfalls drei Schneidkanten 93 auf, welche in radialer Richtung in die Hauptschneidkanten 91 des Werkzeus 1 übergehen. Auch die Schneidkanten 93 des Zentrierkegels 11 sind abschnittsweise hinterschliffen, so daß deren Freiflächen einen positiven Freiwinkel aufweisen.

Die Schneidkanten 93 verlaufen außerdem schräg zur Vorschubrichtung 19. Insbesondere verlaufen die Schneidkanten 93 bei den hier beschriebenen Ausführungsformen auf einem Kegelmantel , welcher die Einhüllende des Zentrierkegels 11 bildet. Der Kegelmantel ist dabei so ausgerichtet, daß dessen Spitze in Vorschubrichtung zeigt.

Die schräg verlaufenden Schneidkanten 93 des Zentrierkegels weisen außerdem einen kleineren Spitzenwinkel als die Hauptschneiden auf. Damit wird der Anpressdruck auf die Schneidkanten 93 des Zentrierkegels beim Bohren zusätzlich gegenüber den Hauptschneidkanten erhöht. Dies stellt eine hinreichende Schneidwirkung des Zentrierkegels 11, beziehungsweise der achsennahen Bereiche des Bohrkopfes 8 sicher.

Das Bohrwerkzeug ist außerdem so ausgestaltet, daß die Schneidkanten 93 des Zentrierkegels 11 eigene Schnittflächen 17 aufweisen. Die Schnittflächen können so angeordnet sein, daß sie einen zu den Schnittflächen 15 der Hauptschneiden 91 in etwa gleichen Spanwinkel aufweisen.

Die Freiflächen 12 der Hauptschneiden 91 können außerdem konvex geformt sein. Dies ermöglicht das Bohren unter einer Schrägstellung des Bohrwerkzeugs zu der Oberfläche des Werkstücks. Dabei ist eine Schrägstellung von bis zu 10° zur Normalen des Werkstücks möglich, ohne daß der Bohrer verläuft oder ausbricht. Die konvexe Form kann auch durch Anschliff mehrerer ineinander übergehender gerader Flächenstücke erreicht werden, deren Einhüllende konvex geformt ist.

Fig. 2B zeigt eine Aufsicht auf den Bohrkopf 8 einer weiteren Ausführungsform des Bohrwerkzeugs 8. Im Gegensatz zu der in Fig. 2A gezeigten Ausführungsform sind hier auch die Freiflächen 14 der Nebenschneidkanten 92 hinterschnitten. Dies erniedrigt zusätzlich die Reibung des Bohrwerkzeugs im Bohrkanal.

In Fig. 3 ist eine Ansicht noch einer weiteren Ausführungsform des Bohrwerkzeugs dargestellt. Der Schaft weist eine Stufe 21 auf, so daß der Bohrkopf 8 am ersten Ende 5 einen kleineren Durchmesser als das zweite Ende 7 zur Aufnahme in ein Bohrfutter aufweist. Die Stufe dient als Anschlag beim Bohren, so daß sich mit diesem Bohrwerkzeug Bohrlöcher mit einer definierten Tiefe erzeugen lassen.

Bevorzugt ist das Bohrwerkzeug 1 aus Hartmetall, Feinkorn-Vollhartmetall, HSS oder HSSE gefertigt, um eine hinreichende Härte und Elastizität des Bohrwerkzeugs, insbesondere des Bohrkopfes 8 zu erreichen.

Um hohe Standzeiten auch für das Bohren harter Materialien zu erreichen, kann das Werkzeug eine besondere Beschichtung aufweisen.

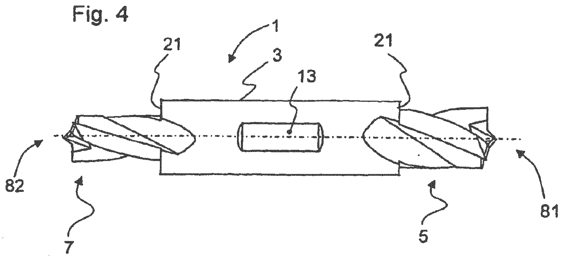

Fig. 4 zeigt eine Seitenansicht auf eine Ausführungsform des erfindungsgemäßen Bohrwerkzeugs 1, die im Gegensatz zu den oben beschriebenen Ausführungsformen an jedem Ende 5 und 7 des Schafts 3 einen Bohrkopf 81, beziehungsweise 82 aufweist. Jeder der Bohrköpfe 81 und 82 ist erfindungsgemäß geformt.

Die Bohrköpfe können gleiche Durchmesser, oder, wie in Fig. 4 dargestellt, auch unterschiedliche Durchmesser aufweisen. Bei gleichen Bohrkopfdurchmessern muß nach Verschleiß eines der Bohrköpfe das Bohrwerkzeug 1 nicht sofort ausgetauscht, sondern kann vielmehr mit dem anderen Bohrkopf weiterbenutzt werden. Dies erhöht die Standzeit des Bohrwerkzeugs zusätzlich um einen Faktor zwei. Insbesondere ist auch eine Ausführungsform mit zwei Bohrköpfen ohne Stufen im Schaft möglich.

Unterschiedliche Durchmesser der Bohrköpfe 81 und 82 können für verschiedene Lochdurchmesser verwendet werden, was das Wechseln des Werkzeugs ebenfalls entbehrlich macht, wenn an einem Werkstück Löcher mit zwei verschiedenen Lochdurchmessern gebohrt werden müssen.

Die Bohrköpfe können sich auch hinsichtlich ihrer anderen Parameter, wie Zentrierkegeldurchmesser und/oder Zentrierkegelhöhe, Anspitzwinkel, Freiwinkel oder Spanwinkel unterscheiden, um sie an verschiedene Werkstückmaterialien anzupassen.

Bei der in Fig. 4 dargestellten Ausführungsform weist der Schaft für jeden der Bohrköpfe eine Stufe 21 auf, bei welcher sich in Vorschubrichtung für den jeweiligen Bohrkopf der Schaftdurchmesser vergrößert und die so als Anschlag zur Begrenzung der Bohrtiefe dient.

Das in Fig. 4 gezeigte Bohrwerkzeug 1 weist in der Mitte des Schafts 3 zwischen den beiden Bohrköpfen 81 und 82 eine Spannfläche 13 auf. Ebenso kann der Schaft jedoch auch zwei Spannflächen 13 aufweisen, die in axialer Richtung beabstandet sind oder sich in Bezug auf die Schaftachse 2 gegenüberliegen.

Es ist dem Fachmann offensichtlich, daß die Erfindung nicht nur auf die beschriebenen Ausführungsformen beschränkt ist. So können die Merkmale der verschiedenen Ausführungsformen auch in vielfältiger Weise miteinander kombiniert werden. Beispielsweise können die in den Figuren 1 und 3 dargestellten Bohrwerkzeuge sowohl einen Bohrkopf gemäß Fig. 2A, als auch einen wie in Fig. 2B gezeigten Kopf aufweisen.

### Bezugszeichenliste

| | |
|---|---|
| 1 | Bohrwerkzeug |
| 2 | Schaftachse, Rotationsachse |
| 3 | Schaft |
| 5 | erstes Ende des Schafts 3 |
| 7 | zweites Ende des Schafts 3 |
| 8, 81, 82 | Bohrkopf |
| 9 | Schneiden |
| 91 | Hauptschneidkanten |
| 92 | Nebenschneidkanten |
| 93 | Schneidkanten des Zentrierkegels |
| 94 | Seitenschneidkanten |
| 10 | Spannut |
| 11 | Zentrierkegel |
| 12 | Freifläche der Hauptschneidkanten 91 |
| 13 | Spannfläche |
| 14 | Freifläche der Nebenschneidkanten 92 |
| 15 | Schneidfläche |
| 17 | Schneidfläche des Zentrierkegels |
| 19 | Vorschubrichtung |
| 20 | Drehrichtung |
| 21 | Stufe |

## Patentansprüche

1. Bohrwerkzeug (1), hergerichtet zum Lösen und Aufbohren geschweißter oder gelöteter Verbindungselemente an Blechen, umfassend einen Schaft (3) mit einem ersten Ende (5) und einem zweiten Ende (7), wobei zumindest eines der Enden einen Bohrkopf (8, 81, 82) mit Spannuten (10) aufweist und das Bohrwerkzeug einen Zentrierkegel (11) aufweist, der aus einer Fläche, die durch Rotation des Bohrwerkzeugs um seine Schaftachse (2) von Hauptschneidkanten (91) beschrieben wird, hervorragt und wobei die Hauptschneidkanten (91) der Schneiden des Bohrkopfes (8, 81, 82) zumindest abschnittsweise hinterschliffen sind,
**dadurch gekennzeichnet, dass**
der Bohrkopf zumindest drei Schneiden (9) und der Zentrierkegel (11) zumindest drei Schneidkanten (93) aufweist und die Schneidkanten (93) des Zentrierkegels (11) zumindest abschnittsweise positiv hinterschliffen sind und dass die Spannuten (10) nach Art eines Spiralbohrers verlaufen.

2. Bohrwerkzeug nach Anspruch 1, **dadurch gekennzeichnet, daß** die Schneidkanten (93) schräg zur Vorschubrichtung verlaufen, insbesondere, daß die Schneidkanten (93) des Zentrierkegels (11) einen kleineren Spitzenwinkel als die Hauptschneiden (91) aufweisen.

3. Bohrwerkzeug nach einem der Ansprüche 1 bis 2, **dadurch gekennzeichnet, daß** der Schaft (3) zumindest eine Stufe (21) entlang der Vorschubrichtung (19) aufweist.

4. Bohrwerkzeug nach einem der Ansprüche 1 bis 3, **dadurch gekennzeichnet, daß** der Schaft (3) vorzugsweise am zweiten Ende (7) zumindest eine Spannfläche (13) aufweist.

5. Bohrwerkzeug nach einem der Ansprüche 1 bis 4, **dadurch gekennzeichnet, daß** das Bohrwerkzeug, insbesondere der Bohrkopf (8, 81, 82) eine Beschichtung aufweist, die ein Hartstoff-Material umfaßt.

6. Bohrwerkzeug nach Anspruch 5, **dadurch gekennzeichnet, daß** die Beschichtung ein korrosionsschützendes Material umfaßt.

7. Bohrwerkzeug nach einem der Ansprüche 1 bis 6, **dadurch gekennzeichnet, daß** das Material des Bohrkopfes (8, 81, 82) Hartmetall und/oder Feinkorn-Vollhartmetall und/oder HSS und/oder HSSE umfaßt.

8. Bohrwerkzeug nach einem der Ansprüche 1 bis 7, **dadurch gekennzeichnet, daß** die Freiflächen (12) der Hauptschneiden einen konvex geformten Bereich aufweisen, insbesondere, daß die Freiflächen (12) der Hauptschneiden konvex geformt sind.

9. Bohrwerkzeug nach Anspruch 8, **dadurch gekennzeichnet, dass** der konvex geformte Bereich derart geformt ist, dass der Bohrer verkantungsfrei bis zu 10° zur Normalen einer anzubohrenden Oberfläche eines Werkstücks arbeitet.

10. Bohrwerkzeug nach einem der Ansprüche 1 bis 9, **dadurch gekennzeichnet, daß** die Freiflächen (14) der Nebenschneidkanten (92) hinterschliffen sind.

11. Bohrwerkzeug nach einem der Ansprüche 1 bis 10,
**dadurch gekennzeichnet, daß** beide Enden (5, 7) des Schafts (3) einen Bohrkopf (81, 82) aufweisen.

12. Bohrwerkzeug nach Anspruch 11, **dadurch gekennzeichnet, daß** die Bohrköpfe (81, 82) unterschiedliche Durchmesser aufweisen.

13. Verwendung eines Bohrwerkzeugs, insbesondere eines Bohrwerkzeugs nach einem der vorstehenden Ansprüche mit einem Schaft (3) mit einem ersten Ende (5) und einem zweiten Ende (7), wobei zumindest eines der Enden einen Bohrkopf (8, 81, 82) mit Spannuten (10) aufweist und das Bohrwerkzeug einen Zentrierkegel (11) aufweist, der aus einer Fläche, die durch Rotation des Bohrwerkzeugs um seine Schaftachse (2) von den Schneidkanten (91) beschrieben wird, hervorragt und wobei
der Bohrkopf zumindest drei Schneiden (9) und einen Zentrierkegel (11) aufweist und die Hauptschneidkanten (91) der zumindest drei Schneiden des Bohrkopfes (8, 81, 82) zumindest abschnittsweise hinterschliffen sind, die Fläche, die durch Rotation des Bohrwerkzeugs um seine Schaftachse (2) von den Schneidkanten (91) beschrieben wird, eine im wesentlichen ebene Fläche umfaßt der Zentrierkegel (11) zumindest drei Schneidkanten (93) aufweist und die Schneidkanten (93) des Zentrierkegels (11) zumindest abschnittsweise positiv hinterschliffen sind und bei welchem die Spannuten (10) nach Art eines Spiralbohrers verlaufen zum Lösen und Aufbohren geschweißter oder gelöteter Verbindungselemente an Blechen.

## Claims

1. Drilling tool (1) adapted to loosen and rebore welded or soldered joint elements on sheet metal, comprising a shaft (3) with a first end (5) and a second end (7) wherein at least one of the ends comprises a cutter head (8, 81, 82) with flutes (10) and the drilling tool comprises a centring cone (11) which projects from an area which is defined through rotation of the drilling tool about its shaft axis (2) by main cutting edges (91), wherein the main cutting edges (91) of the cutter head (8, 81, 82) are relief-ground at least in sections, **characterised in that** the cutter head comprises at least three blades (9) and the centring cone (11) comprises at least three cutting edges (93) and the cutting edges (93) of the centring cone (11) are positively relief-ground at least in sections, and **in that** the flutes (10) run according to the type of a twist drill.

2. Drilling tool according to claim 1, **characterised in that** the cutting edges (93) are inclined relative to the feed direction, particularly **in that** the cutting edges (93) of the centring cone (11) comprise a smaller included angle than the main blades (91).

3. Drilling tool according to one of the claims 1 to 2, **characterised in that** the shaft (3) comprises at least one step (21) along the feed direction (19).

4. Drilling tool according to one of the claims 1 to 3, **characterised in that** the shaft (3) comprises at least one clamping area (13) preferably at the second end (7).

5. Drilling tool according to one of the claims 1 to 4, **characterised in that** the drilling tool, particularly the cutter head (8, 81, 82) has a coating which comprises a hard material.

6. Drilling tool according to claim 5, **characterised in that** the coating comprises an anti-corrosion material.

7. Drilling tool according to one of the claims 1 to 6, **characterised in that** the material of the cutter head (8, 81, 82) comprises hard metal and / or fine-grain solid hard metal and / or HSS and / or HSSE.

8. Drilling tool according to one of the claims 1 to 7, **characterised in that** the flanks (12) of the main blades comprise a convexly formed region, particularly **in that** the flanks (12) of the main blades are convexly formed.

9. Drilling tool according to claim 8, **characterised in that** the convexly formed region is formed in such a way that the drill works without going out of line up to 10° to the normal of a surface of a workpiece to be drilled.

10. Drilling tool according to one of the claims 1 to 9, **characterised in that** the flanks (14) of the secondary cutting edges (92) are relief-ground.

11. Drilling tool according to one of the claims 1 to 10, **characterised in that** both ends (5, 7) of the shaft (3) comprise a cutter head (81, 82).

12. Drilling tool according to claim 11, **characterised in that** the cutter heads (81, 82) have different diameters.

13. Use of a drilling tool, particularly a drilling tool according to one of the preceding claims with a shaft (3) with a first end (5) and a second end (7), wherein at least one of the ends comprises a cutter head (8, 81, 82) with flutes (10) and the drilling tool comprises a centring cone (11) which projects from an area which is defined through rotation of the drilling tool about its shaft axis (2) by the cutting edges (91), wherein the cutter head comprises at least three blades (9) and a centring cone (11), the main cutting edges (91) of the at least three blades of the cutter head (8, 81, 82) are relief-ground at least in sections, the centring cone (11) comprises at least three cutting edges (93) and the cutting edges (93) of the centring cone (11) are positively reliefground at least in sections and wherein the flutes (10) run according tο the type of a twist drill
for loosening and reboring welded or soldered joint elements on sheet metal.

## Revendications

1. Outil de perçage (1), agencé pour dissocier et percer des éléments de liaison soudés ou brasés sur des tôles, comprenant une tige (3) avec une première extrémité (5) et une deuxième extrémité (7), l'une au moins des extrémités étant munie d'une tête de perçage (8, 81, 82) dotée de rainures de dégagement de copeaux (10), et l'outil de perçage comportant un cône de centrage (11) qui dépasse d'une surface, qui est décrite par rotation des arêtes tranchantes principales (91) de l'outil de perçage autour de son axe de tige (2), les arêtes tranchantes principales (91) de la tête de perçage (8, 81, 82) étant pourvues de dépouilles, au moins par tronçons, **caractérisé en ce que** la tête de perçage comporte au moins trois tranchants (9), **en ce que** le cône de centrage (11) comporte au moins trois arêtes tranchantes (93), et **en ce que** les arêtes tranchantes (93) du cône de centrage (11) sont pourvues de dépouilles positives, au moins par tronçons, et ce que les rainures de dégagement de copeaux (10) s'étendant à la manière d'un foret hélicoïdal.

2. Outil de perçage selon la revendication 1, **caractérisé en ce que** les arêtes tranchantes (93) s'étendent obliquement par rapport au sens de l'avance, notamment **en ce que** l'angle de pointe des arêtes tranchantes (93) du cône de centrage (11) est inférieur à celui des tranchants principaux (91).

3. Outil de perçage selon l'une des revendications 1 à 2, **caractérisé en ce que** la tige (3) comporte au moins un gradin (21) le long du sens de l'avance (19).

4. Outil de perçage selon l'une des revendications 1 à 3, **caractérisé en ce que** la tige (3) comporte au moins une surface de dégagement de copeaux (13), de préférence au niveau de la deuxième extrémité (7).

5. Outil de perçage selon l'une des revendications 1 à 4, **caractérisé en ce que** l'outil de perçage, notamment la tête de perçage (8, 81, 82), comporte un revêtement comprenant un matériau en matière dure.

6. Outil de perçage selon la revendication 5, **caractérisé en ce que** le revêtement comprend un matériau de protection contre la corrosion.

7. Outil de perçage selon l'une des revendications 1 à 6, **caractérisé en ce que** le matériau de la tête de perçage (8, 81, 82) comprend du métal dur et/ou du métal dur dans la masse à fine granulométrie et/ou du HSS et/ou du HSSE.

8. Outil de perçage selon l'une des revendications 1 à 7, **caractérisé en ce que** les faces de dépouille (12) des tranchants principaux comportent une zone de forme convexe, notamment **en ce que** les faces de dépouille (12) des tranchants principaux sont de forme convexe.

9. Outil de perçage selon la revendication 8, **caractérisé en ce que** la zone de forme convexe est conformée de telle sorte que la perceuse fonctionne sans se coincer jusqu'à 10° par rapport à la normale d'une surface d'une pièce à percer.

10. Outil de perçage selon l'une des revendications 1 à 9, **caractérisé en ce que** les faces de dépouille (14) des arêtes tranchantes auxiliaires (92) comportent des dépouilles.

11. Outil de perçage selon l'une des revendications 1 à 10, **caractérisé en ce que** les deux extrémités (5, 7) de la tige (3) comportent une tête de perçage (81, 82).

12. Outil de perçage selon la revendication 11, **caractérisé en ce que** les têtes de perçage (81, 82) possèdent différents diamètres.

13. Utilisation d'un outil de perçage, notamment d'un outil de perçage selon l'une des revendications précédentes, comportant une tige (3) avec une première extrémité (5) et une deuxième extrémité (7), l'une au moins des extrémités étant munie d'une tête de perçage (8, 81, 82) dotée de rainures de dégagement de copeaux (10), et l'outil de perçage comportant un cône de centrage (11) qui dépasse d'une surface, qui est décrite par rotation des arêtes tranchantes (91) de l'outil de perçage autour de son axe de tige (2), et la tête de perçage comportant au moins trois tranchants (9) et un cône de centrage (11), les arêtes tranchantes principales (91) des au moins trois tranchants de la tête de perçage (8, 81, 82) étant pourvues de dépouilles, au moins par tronçons, le cône de centrage (11) comportant au moins trois arêtes tranchantes (93), et les arêtes tranchantes (93) du cône de centrage (11) étant pourvues de dépouilles positives, au moins par tronçons, et dans lequel les rainures de dégagement de copeaux (10) s'étendant à la manière d'un foret hélicoïdal pour dissocier et percer des éléments de liaison soudés ou brasés sur des tôles.
